# EUROPEAN PATENT APPLICATION

(11) **EP 1 624 671 A1**
(43) Date of publication of application: **08.02.2006**
(21) Application number: 04732432.2
(22) Date of filing: 12.05.2004
(51) Int. Cl.: H04N 5/222, G03B 15/02, G10K 15/02

(54) **RECORDING CONTROL SYSTEM**

(30) Priority: 12.05.2003 JP 2003133272; 30.01.2004 JP 2004024442
(71) Applicant: SEIKO EPSON CORPORATION, Shinjuku-ku, Tokyo 163-0811 (JP)
(72) Inventor: TAKEUCHI, Kesatoshi, Suwa-shi, Nagano 3928502 (JP); AOKI, Isamu, Suwa-shi, Nagano 3928502 (JP)
(74) Representative: Hoffmann, Eckart
(86) International application number: PCT/JP2004/006378
(87) International publication number: WO 2004/100533

(57) **Abstract**

As a result of applying a surplus signal that is outside the recognizable area of a person but within the recording sensitivity range of a recording apparatus to a recording object, this surplus signal is added to the image or sound from the recording object, and the recording medium affected by this surplus signal will not be able to record the image or sound from the recording object correctly.

## Description

### TECHNICAL FIELD

The present invention generally relates to a system for preventing the unauthorized recording upon recording a recording object, which is creative work such as artwork, films or music concerts, in a recording medium with a recording device, and particularly to a system for automatically preventing the unauthorized photography of a photographic object.

### BACKGROUND ART

As a conventional camera comprising a photography prohibition function, for example, there is a [camera] described in the gazette of Japanese Patent Laid-Open Publication No. 2001-149355 and a [camera] described in the gazette of Japanese Patent Laid-Open Publication No. H07-036091. Among the above, the latter detects a person with a pyroelectric infrared light sensor prior to the exposure operation, further detects blurring with a blurring detection means, and, when detection signals thereof are both output, [this camera] prohibits photography, or pre-flashes a strobe light and performs exposure operation including the flashing of a strobe, and prohibits photography or flashes the strobe light including a pre-flash when the photographic subject is a person and there is blurring, and, therefore, is able to photograph the person clearly while alleviating the red-eye phenomenon.

### DISCLOSURE OF THE INVENTION

Even with a conventional camera comprising a photography prohibition function, it is not possible to automatically prevent the unauthorized photography of creative work such as fine art. Therefore, in the foregoing case, the method of handling the foregoing situation was restricted to preventing such [unauthorized photography] by cautioning the person trying to photograph the fine art without authorization with personnel measures such as staffing security guards at the exhibition site of such fine art.

Thus, in order to overcome the foregoing problems, an object of the present invention is to provide a system capable of automatically preventing, restricting or prohibiting the unauthorized recording of creative work (recording object) such as artwork (fine art, etc.), films and music concerts.

In order to achieve the foregoing object, the present invention is a recording control system for recording a recording object in a recording medium with a recording apparatus, wherein a surplus signal that is outside the recording sensitivity range of a person but within the recording sensitivity range of the recording apparatus is applied to the recording object, and the recording object affected by the surplus signal is recorded in the recording medium.

The second invention is a photography prevention system of a photographic object for recording a photographic object in a recording medium, comprising means for irradiating barely visible light (including invisible light) outside the recognizable area of a person to the photographic object, wherein the barely visible light is contained within the recordable sensitivity range of the imaging means for recording an image from the photographic object in the recording medium. Infrared light is preferable as the barely visible light. In a preferred embodiment of the present invention, the barely visible light is irradiated together with, or separate from, the illuminating light to the photographic object, and the photographic means records the reflected image from the photographic object in the recording medium.

Further, the present invention is also a recording prevention system of a sound recording object for recording a sound recording object in a recording medium, comprising means for applying a surplus sound signal (including barely audible sound and inaudible sound) outside the recognizable area of a person to the recording object; and sound recording means for recording the sound output from the sound recording object in the recording medium; wherein the barely audible sound is contained within the sound recordable sensitivity range of the sound recording means.

According to the present invention, as a result of applying a surplus signal that is outside the recognizable area of a person but within the recording sensitivity range of a recording apparatus to a recording object, this surplus signal is added to the image or sound from the recording object, and the recording medium affected by this surplus signal will not be able to accurately record the image or sound from the recording object. A surplus signal is barely visible or invisible light such as infrared light in a case when the recording object is a photographic object, and is barely audible or inaudible sound of an ultrasonic range in a case when the recording obj ect is a sound recording object. A recording medium is not limited, so as long as it is able to record information, such as a hard disk, a flash memory or a memory stick in a photographic device.

Moreover, as a result of employing a constitution further comprising surplus signal generation means for generating the surplus signal; surplus signal generation control means for controlling the generation of the surplus signal and the suspension thereof; and ID recognition means; wherein, when a specific ID is recognized, the control means suspends the generation of the surplus signal for a prescribed period of time, the present invention is able to define a specific ID to a specific person, a specific recording apparatus or a specific place or building, and permit recording by recognizing a specific item such as the authorized person or recording apparatus (digital camera, etc.), authorized place or authorized building provided with this ID.

### BRIEF DESCRIPTION OF THE DRAWINGS

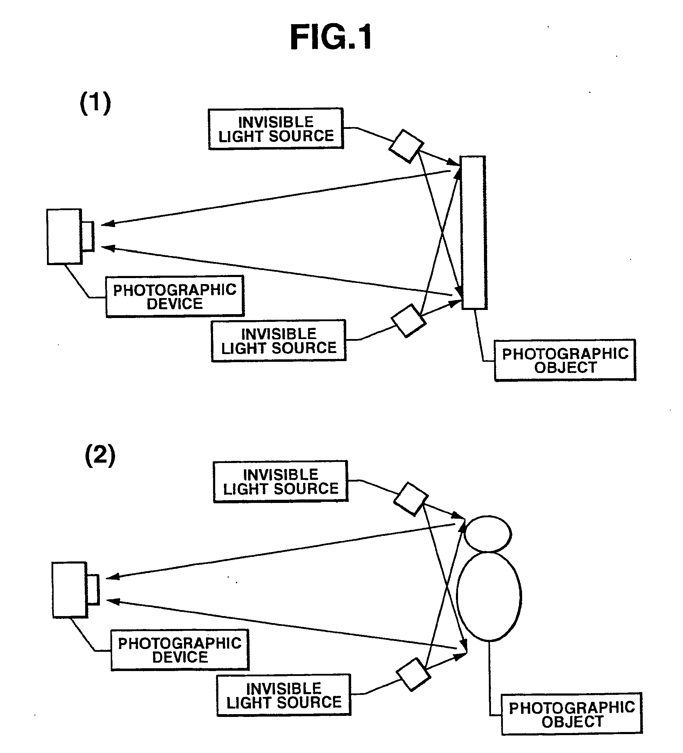

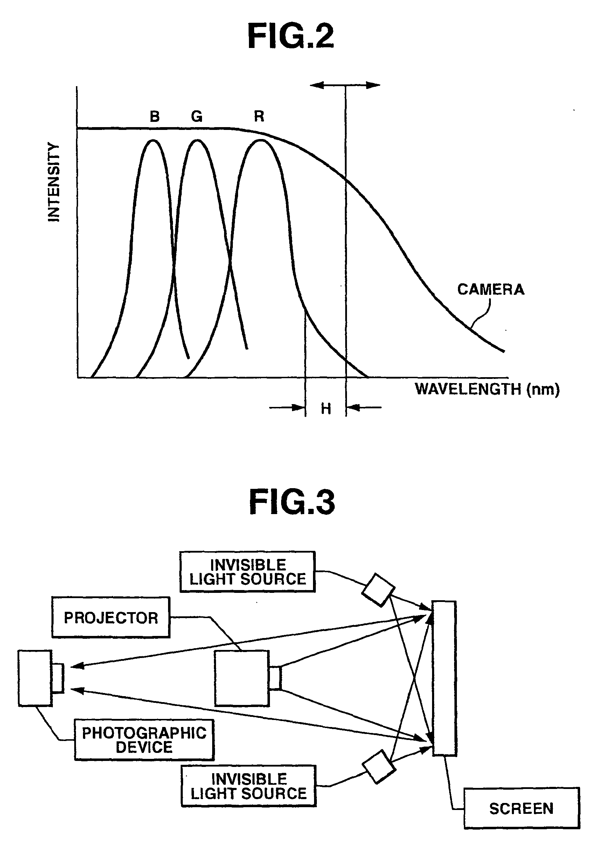

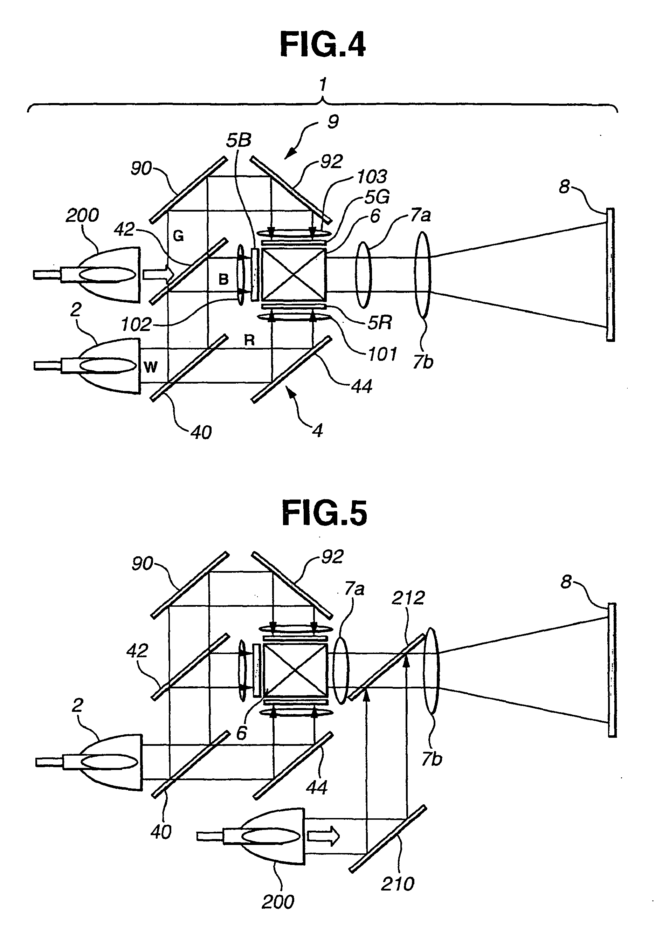

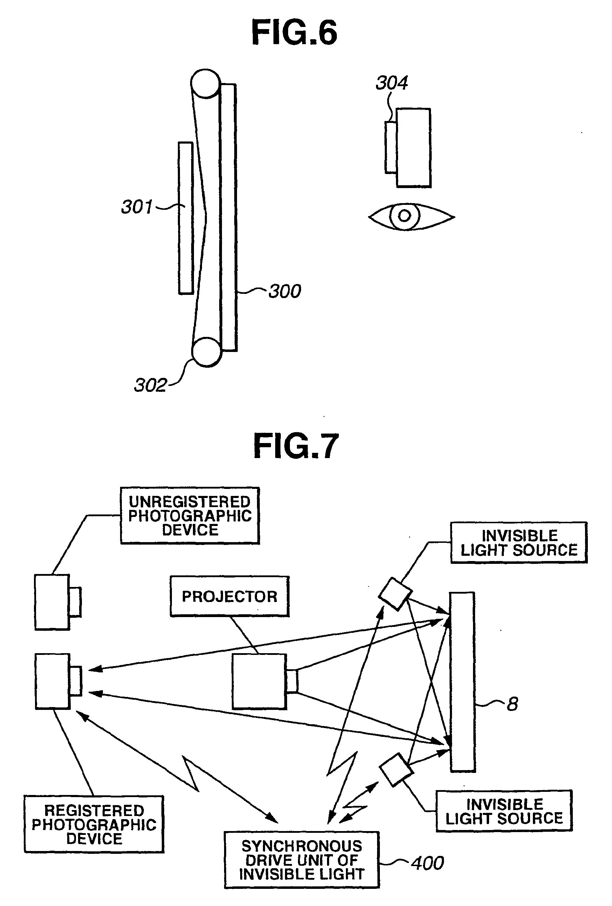

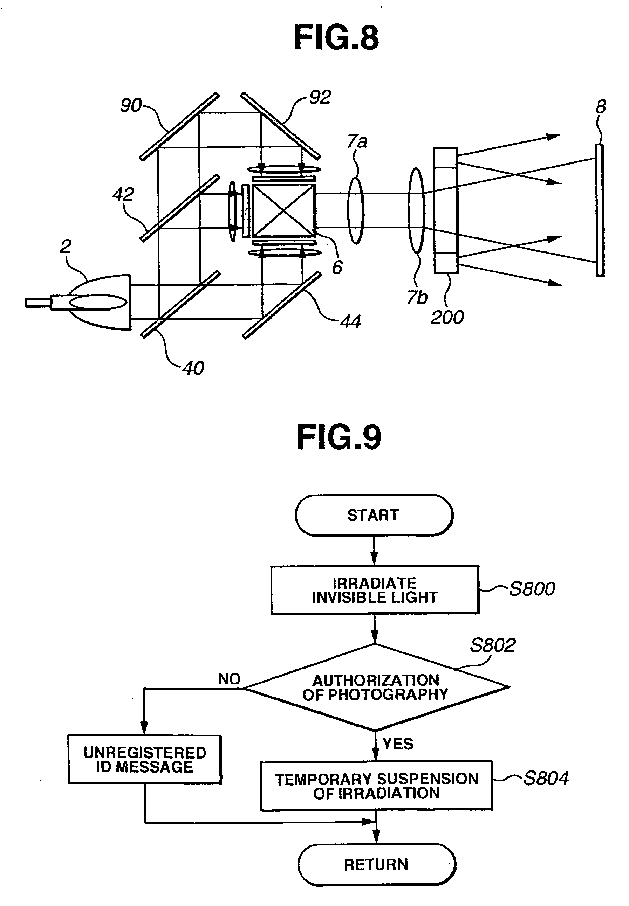

FIG. 1 is a functional block diagram of the system or method pertaining to the present invention; FIG. 2 is a characteristic diagram comparing the characteristics of the sensitivity of the human eye and the sensitivity of an imager; FIG. 3 is a functional block diagram of a system for guarding the photography of the image projected on the screen from the projector based on the same principle as the system depicted in FIG. 1 and FIG. 2; FIG. 4 is a structural diagram of the device in which a light source for irradiating infrared light is provided inside the projector; FIG. 5 is a diagram pertaining to a modified example of the system illustrated in FIG. 4; FIG. 6 is a diagram showing the principle diagram of the embodiment in which the system of the present invention is employed in a flat screen; FIG. 7 is a control block diagram of the recording control system comprising the control system for confirming the recording system ID and controlling the irradiation and suspension of the invisible light; FIG. 8 is a operational flowchart of the control circuit of the system depicted in FIG. 7; and FIG. 9 is a diagram showing another modified example of the system illustrated in FIG. 4.

### BEST MODE FOR CARRYING OUT THE INVENTION

Embodiments of the present invention are now explained. Fig. 1 is a functional block diagram of the system or method pertaining to the present invention; wherein (1) shows a case when the photographic object is fine art, and (2) shows a case when the photographic object is a person or an item similar to a person.

An invisible light source (infrared light, etc.) is arranged around the photographic object, and invisible light is irradiated toward the photographic object. Although the light source of the visible light is not shown, this is provided facing the photographic object. As the infrared light source, one type among a xenon bulb, LED, titanium oxide light, and laser beam may be employed.

The invisible light and visible light is reflected from the photographic object, arrives at the observer of the photographic object, and the photographer is able to recognize the photographic object thereby. Although the invisible light is contained in the reflected light, since a person will not recognize this invisible light, the observer is able to recognize the photographic object with the reflection of the visible light.

Meanwhile, the wavelength band of the invisible light is set outside the recognizable area of the human retina, but within a photographable wavelength band of the imager (CCD camera, etc.) of a photographic device such as a digital camera, digital video and so on.

Fig. 2 is a characteristic diagram comparing the characteristics of the sensitivity of the human eye and the sensitivity of an imager. B is the sensitivity against a blue color, G is the sensitivity against a green color, and R is the sensitivity against a red color. F is the boundary wavelength of an infrared filter, and the constitution is such that the light having a wavelength that is greater than this boundary wavelength will not reach the imager. Here, if infrared light having a wavelength that is outside the sensitivity range of the human eye or a low sensitivity range (H) (600 to 700nm in the example illustrated in Fig. 2) is irradiated as the invisible light to the photographic object, this will be detected by the imager although the human eye will not be able to recognize the same, and an overall red image will be recorded in the recording medium, and it will not be possible to photograph the photographic object correctly.

As described above, even if a filter against light having a wavelength outside the visible light is provided to the photographic device, if invisible light having a wavelength band, which is unblockable even with a filter, is irradiated to the photographic object, it will be possible to prevent the photography of the photographic object. From this perspective, it is preferable that the wavelength of the invisible light source is changeable in accordance with the specification of a filter. The wavelength may also be changed temporally. The irradiation light source of the invisible light may be provided around, or within the frame of, the photographic object in the showcase.

Fig. 3 pertains to the second embodiment of the present invention, and is a functional block diagram of a system for guarding the photography of the image projected on the screen from the projector based on the same principle as the system depicted in Fig. 1 and Fig. 2.

Fig. 4 is a diagram showing an embodiment in which a light source for irradiating infrared light is provided inside the projector. A projector 1 has a light source 2; a color separation optical system 4 which separates the luminous flux W output from the light source 2 into the respective color luminous fluxes R, G, B of red, green and blue; three liquid crystal panels 5R, 5G, 5B as modulation means for modulating the respective color luminous fluxes; a color composition optical system 6 for recomposing the modulated color luminous fluxes; a projection lens 7b for enlarging and projecting the composed luminous flux on a screen 8; and a lens 7a for guiding the composed light to the projection lens 7b on the side of the color composition prism 6 of the projection lens 7b. Further, the [projector 1] also has a light guiding system 9 for guiding the green color luminous flux G to the corresponding liquid crystal valve 5G among the respective color luminous fluxes separated with the color separation optical system 4.

As the light source lamp 21 of the light source 2, a halogen lamp, a metal halide lamp, a xenon lamp and so on may be used. The color separation optical system 4 is constituted from a blue-green reflecting dichroic mirror 40, a blue reflecting dichroic mirror 42, and a reflecting mirror 44. With the luminous flux W, foremost, in the blue-green reflecting dichroic mirror 40, the blue luminous flux B and green luminous flux G are reflected orthogonally, and it then heads toward the blue reflecting dichroic mirror 42.

The red luminous flux R passes through this mirror 40, is reflected orthogonally with the rear reflecting mirror 44, and then output from the output portion of the red luminous flux to the side of the color composition optical system. With respect to the blue and green luminous fluxes B, G reflected with the mirror 40, only the blue luminous flux B is reflected orthogonally at the blue reflecting dichroic mirror 42, and output from the output portion of the blue luminous flux to the side of the color composition optical system. The green luminous flux G that passed through this mirror 42 is output from the output portion of the green luminous flux toward the side of the light guiding system 9.

Here condenser lenses 101, 102 and 103 formed from a plano-convex lens are disposed respectively to the output side of the output portion of each color luminous flux of the color separation optical system 4. Therefore, each color luminous flux output from the respective output portions is input to these conversion lenses 101 to 103 and becomes parallel.

Among the respective color luminous fluxes R, G, B that became parallel, red and blue luminous fluxes R, B enter the liquid crystal panels 5R, 5B disposed immediately behind the conversion lenses 101, 102, are subject to modulation, and then image information corresponding to each color light is added thereby. In other words, the drive means performs switching control to these liquid crystal panels in accordance with the image information, and each color light that passes therethrough is subject to modulation. Meanwhile, the green luminous flux G is guided to the corresponding liquid crystal panel 5G via the light guiding system 9, and subject to modulation according to the image information. The light guiding system 9 is constituted from an input side reflecting mirror 90 and an output side reflecting mirror 92.

Each color luminous flux that passed through the respective liquid crystal panels 5R, 5G, 5B and which was subject to modulation enters the color composition optical system 6, and is recomposed thereat. A dichroic prism is employed to constitute the color composition optical system 6.

An infrared light source 200 is provided to this projector. The infrared light irradiated from the infrared light source is supplied to the color composition system 6 via the mirror 42. In this color composition system, the infrared light is composed with the respective color signals of RGB, and image with the infrared light added thereto is formed on the screen similar to Fig. 3.

There are the following modes of providing a surplus signal to the recording object. That is, to continuously irradiate an optical signal having a wavelength other than the visible light area to the photographic object; to irradiate this intermittently; to irradiate this in random numbers; or to mix the invisible light to the illuminating light source of the light source.

Incidentally, although in the present embodiment the invisible light was irradiated to the photographic object, the constitution may be such that an inaudible sound is applied and irradiated to the sound recording object, and, by overdubbing an inaudible sound to the audible sound, disabling the correct recording of the audible sound in the recording medium thereby. As a detectable area of the recording device outside the audible range of a human being, there is, for instance, an ultrasonic wave signal having a wavelength of 50kHz to 60kHz.

As embodiments relating to the present invention, there are the following examples. A unit composed of a microphone and a speaker may be provided respectively to two distant locations. The microphone will detect the foregoing ultrasonic wave signal and the speaker may generate an ultrasonic wave signal. The signal detected with the microphone is converted to a humanly audible sound with a conversion circuit. Sound emitted from a person is converted into an ultrasonic wave range with the conversion circuit and output from the speaker. As a result, a secret conversation system is enabled between distant locations.

Fig. 5 is a diagram pertaining to a modified example of the system illustrated in Fig. 4, and the difference with the system of Fig. 4 is that the light from the invisible light source does not reach the LCD, which is the modulation means, and is irradiated to the wake side of the image composition system. In other words, the infrared light from the infrared light source 200 is reflected at the half mirror 212 between the lens 7a and lens 7a with the mirror 210, and the infrared light is supplied to the projection lens 7b and reaches the screen 8. The screen will realize a mixed display of the image and infrared light.

As a result of adopting the foregoing constitution, it is possible to prevent the heating of the LCD caused by the infrared light, and to further prevent the deterioration in the life of the LCD.

Fig. 6 is a principle diagram of an embodiment in which the system of the present invention is employed in a planar display body. Reference numeral 300 is a permeable LCD, and reference numeral 302 is a back face light source as the backlight thereof. An invisible light source 301 is further disposed at the back face side of the back face light source, and the visible light and invisible light form the backlight is supplied together to the LCD. Reference numeral 304 shows the recording system (camera, naked eye) for recording images from the LCD.

Fig. 7 is a control block diagram of the recording control system comprising a control system for confirming the recording system ID and controlling the irradiation of the invisible light and the suspension thereof. Reference numeral 400 is a control circuit for controlling the ON or OFF of the irradiation of the invisible light. This control circuit comprises a communication control circuit for recognizing the recording system (camera, photographer) ID. For example, let it be assumed that a camera comprising a communication circuit, a memory having and ID recorded thereon, and a microcomputer which has been authorized for ID registration transmits the ID upon photographing the photographic object (image on the screen) by using a portable phone communication network or the like for the control circuit. The control circuit, so as long as the ID is authorized upon referring to the database, suspends the emission from the infrared light source until the completion of photography. A first step switch of the camera shutter may be used to transmit the ID or suspend the infrared emission, and a second step switch may be turned ON to restart the infrared emission. The ID may be defined in the camera itself or be defined in the photographer. As a result of adopting the foregoing constitution, it is possible to permit recording of the recording object only in a permitted recording means.

Fig. 8 is an example of the operational flow of the control circuit, and the control circuit continuously, or during the photography, irradiates [invisible light] from the invisible light source to the photographic object (S800). When the applicant of photography owns a portable phone with a built-in non-contact IC circuit (Felica (trademark)), and when an ID is registered in this IC circuit, the control circuit checks this ID in a non-contact manner, and determines whether or not to permit photography (S802) . Incidentally, registration of the ID may be conducted by the user using the portable phone and accessing a prescribed server to acquire the ID, and storing this in the IC circuit. The control circuit checks whether the ID is a registered ID, and, when this is affirmed, it temporarily suspends the irradiation of the invisible light for a prescribed period of time (minimum time required for the photography) (S804) . When the ID is not registered, the control circuit transmits a message that the ID is not registered and recommending registration to the portable terminal by using the communication circuit (S806). Next, the control circuit ends the processing operation shown in Fig. 8, returns to S802 when there is a photography request from another portable terminal, and continues the irradiation control operation of the invisible light source.

Incidentally, Fig. 9 is a diagram showing another modified example of the system illustrated in Fig. 4, and the difference between the system depicted in Fig. 5 is that the infrared light source 200 is provided detachably to the front side of the lens frame of the projector.

## Claims

1. A recording control system for recording a recording object in a recording medium with a recording apparatus, wherein a surplus signal that is outside the recording sensitivity range of a person but within the recording sensitivity range of said recording apparatus is applied to the recording object, and the recording object affected by said surplus signal is recorded in said recording medium.

2. A photography prevention system of a photographic object for recording a photographic object in a recording medium, comprising means for irradiating barely visible light outside the recognizable area of a person to said photographic object, wherein said barely visible light is contained within the recordable sensitivity range of imaging means for recording an image from said photographic object in said recording medium.

3. A system according to claim 2, wherein said barely visible light is infrared light.

4. A system according to claim 2, wherein said barely visible light is irradiated together with or separate from illuminating light to said photographic object, and said photographic means records the reflected image from said photographic object in said recording medium.

5. A recording control system for recording a sound recording object in a recording medium, comprising means for applying barely audible sound outside the recognizable area of a person to said sound recording object; and sound recording means for recording the sound output from said sound recording object in said recording medium; wherein said barely audible sound is contained within the sound recordable sensitivity range of said sound recording means.

6. A system according to claim 1, further comprising surplus signal generation means for generating said surplus signal; surplus signal generation control means for controlling the generation of the surplus signal and the suspension thereof; and ID recognition means; wherein, when a specific ID is recognized, said control means suspends the generation of said surplus signal for a prescribed period of time.
